# EUROPÄISCHE PATENTSCHRIFT

(11) **EP 1 385 341 B1**
(45) Veröffentlichungstag und Bekanntmachung des Hinweises auf die Patenterteilung: **24.01.2007**
(21) Anmeldenummer: 02016499.2
(22) Anmeldetag: 23.07.2002
(51) Int. Cl.: H04Q 3/62, H04M 3/42

(54) **Kommunikationsanlage und integrierte Serverbaugruppe für eine Kommunikationsanlage**
PBX and integrated server for a PBX
PBX et serveur intégré dans un PBX

(43) Veröffentlichungstag der Anmeldung: 28.01.2004
(73) Patentinhaber: SIEMENS AKTIENGESELLSCHAFT, 80333 München (DE)
(72) Erfinder: Neuhaus, Ralf, 44534 Lünen (DE); Uecker, Rainer, 45470 Muelhelm in Mülheim (DE)

(56) Entgegenhaltungen:
- EP-A- 0 860 966
- DE-A- 19 817 494
- US-A- 6 052 461
- US-A1- 2001 055 381

## Beschreibung

Aus der Produktschrift "Sonderausgabe telcom report und Siemens Magazin COM: ISDN im Büro - HICOM", Siemens AG, Berlin und München, 1985, Seite 58 bis 75 ist eine Kommunikationsanlage für Informationsvermittlung bekannt, insbesondere Sprachinformationsvermittlung. Die Kommunikationsanlage ist in eine Zentraleinheit mit einer zentralen Steuerungseinheit zur Steuerung der Kommunikationsanlage und einem Koppelnetz zur Vermittlung von zu übertragenden Informationen sowie in eine mehrere Anschlußeinheiten aufweisende Peripherieeinheit untergliedert. Die Anschlußeinheiten dienen dabei einem Anschluß von Kommunikationsendgeräten oder eines Kommunikationsnetzes an die Kommunikationsanlage. Die Zentraleinheit umfaßt ist auf einer zentralen Baugruppe der Kommunikationsanlage angeordnet. Die Anschlußeinheiten sind jeweils auf einer separaten Peripherie-Baugruppe angeordnet, die mit der zentralen Baugruppe beispielsweise über Steckverbindungen verbindbar sind.

Auf Seite 63 bis 65 der obigen Produktschrift ist ferner eine Integration von für spezielle betriebliche Aufgaben vorgesehenen Servern in die Kommunikationsanlage beschrieben. Zu diesen Servern zählen beispielsweise Betriebs- und Datenserver, Text- und Faxserver oder Sprachinformationsserver. Die für spezielle betriebliche Aufgaben vorgesehenen Server sind über einen System- oder Mikroprozessorbus an die zentrale Steuerungseinheit gekoppelt, wodurch begrenzte Systemressourcen von zentraler Bedeutung bereits für eine Ankopplung dieser Server verbraucht werden. Zudem ist bei einer Überbrückung von größeren Entfernungen zwischen der zentralen Steuerungseinheit und den Servern ein zusätzlicher Schnittstellenprozessor zur Umsetzung des System- oder Mikroprozessorbus auf einen für größere Entfernungen geeigneten Bus notwendig. Für größere Entfernungen ist beispielsweise der IEC625-Bus geeignet.

Aus US 2001/055381 ist eine Kommunikationsanlage mit den Merkmalen entsprechend dem Oberbegriff des Anspruchs 1 bekannt. Allerdings ist dort nicht beschrieben, eine an das Koppelnetz angeschlossene, in die Kommunikationsanlage integrierte Server-Baugruppe mit zumindest einer Recheneinheit zur Ausführung von Anwendungsprogrammen, einem Arbeitsspeicher, einer Ein-/Ausgabeeinheit und einer Schnittstelle zum Anschluß an das Koppelnetz vorzusehen. Aufgrund dessen besteht ein zusätzlicher Bedarfs an Verkabelung und Systemressourcen zur Bereitstellung einer Server-Funktionalität.

In EP 0 860 966 Al ist eine Lösung mit einer durch einen "Integrierten Server" realisierten PBX-Funktionalität beschrieben. Jedoch wird dort kein Koppelfeld oder Switching Network für einen Kommunikationsanlagenaufbau verwendet.

Der vorliegenden Erfindung liegt die Aufgabe zugrunde, eine Lösung für eine wirtschaftliche Integration von zusätzlicher Server-Funktionalität in eine Kommunikationsanlage anzugeben.

Diese Aufgabe wird durch eine Kommunikationsanlage mit den in Anspruch 1 angegebenen Merkmalen und eine integrierte Server-Baugruppe mit den in Anspruch 8 angegebenen Merkmalen gelöst. Vorteilhafte Weiterbildungen der erfindungsgemäßen Kommunikationsanlage sind in den abhängigen Ansprüchen angegeben.

Ein wesentlicher Aspekt der vorliegenden Erfindung besteht darin, daß zusätzliche Server-Funktionalität durch eine Server-Baugruppe über eine vorhandene Schnittstelle zu einem Koppelnetz in eine Kommunikationsanlage integriert wird. Dies ermöglicht eine Einsparung von Anschlußbaugruppen in der Kommunikationsanlage, von entsprechenden Anschlußeinheiten im

Server, von Verkabelung zwischen Kommunikationsanlage und Server sowie eines Servergehäuses bzw. eine Einsparung von Systemressourcen auf einem System- oder Mikroprozessorbus zu einer zentralen Steuerungseinrichtung der Kommunikationsanlage.

Die vorliegende Erfindung wird nachfolgend an einem Ausführungsbeispiel anhand der Zeichnung näher erläutert. Es zeigt
- Figur 1: eine schematische Darstellung des Aufbaus einer Kommunikationsanlage,
- Figur 2: eine schematische Darstellung des Aufbaus einer Kommunikationsanlage mit einer integrierten Server-Baugruppe.

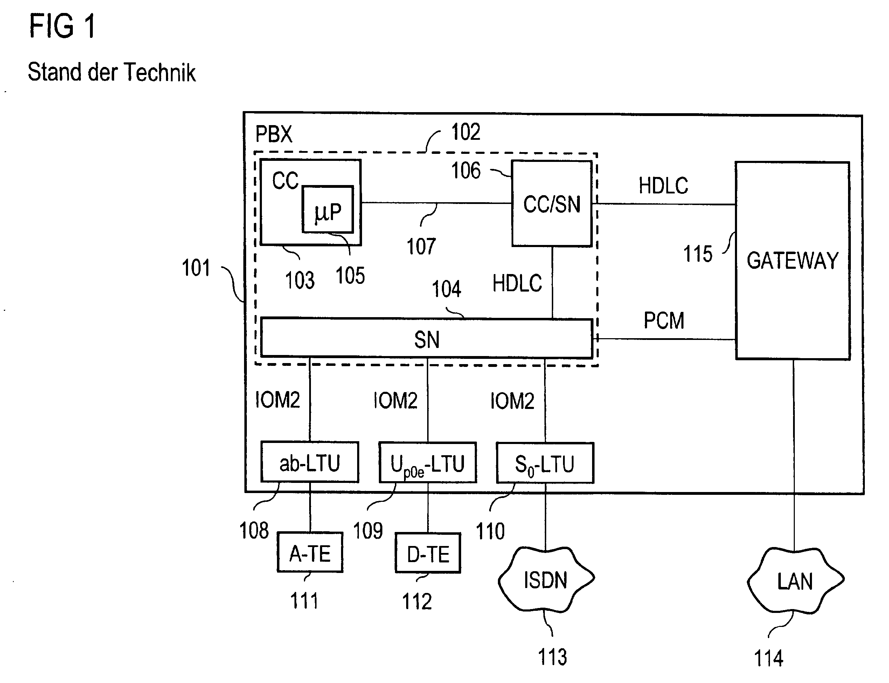

In Figur 1 ist der Aufbau einer Kommunikationsanlage 101 (private branch exchange - PBX) schematisch dargestellt, die beispielweise in WO 01/89231 beschrieben ist. Die Kommunikationsanlage 101 weist eine üblicherweise auf einer zentralen Baugruppe angeordnete Zentraleinheit 102 mit einer zentralen Steuerungseinrichtung 103 (common control -CC) und einem Koppelnetz 104 (switching network - SN) auf. Die zentrale Steuerungseinrichtung 103 umfaßt zur Steuerung von Funktionen der Kommunikationsanlage 101 eine einen Mikroprozessor 105. Durch das Koppelnetz 104 werden über die Kommunikationsanlage 101 zu verbindende Sprach- bzw. Datenübertragungskanäle durchgeschaltet. Die zentrale Steuerungseinrichtung 103 und das Koppelnetz 104 sind über eine Umwandlungseinheit 106 miteinander verbunden. Durch die Umwandlungseinheit 106 werden ein für einen Mikroprozessorbus 107 zwischen der zentralen Steuerungseinrichtung 103 und der Umwandlungseinheit 106 verwendetes Übertragungsprotokoll und ein vom Koppelnetz 104 unterstütztes HDLC-Protokoll (high level data link control) bidirektional in einander umgewandelt.

An das Koppelnetz 104 sind über Verbindungsleitungen Anschlußeinheiten 108, 109, 110 angeschlossen, die üblicherweise jeweils auf einer dezentralen Baugruppe angeordnet sind. Beispielsweise ist eine analoge Anschlußeinheit 108 mit einer ab-Schnittstelle zum Anschluß von analogen Kommunikationsendgeräten 111, eine digitale Anschlußeinheit 109 mit einer Up0e-Schnittstelle zum Anschluß von digitalen Kommunikationsendgeräten 112 und eine weitere digitale Anschlußeinheit 110 mit einer S0-Schnittstelle zum Anschluß eines ISDN-Kommunikationsnetzes 113 an die Kommunikationsanlage 101 vorgesehen. Sprach- bzw. Dateninformationen werden entsprechend dem IOM2-Übertragungsprotokoll (ISDN oriented modular extended) zwischen den Anschlußeinheiten 108, 109, 110 und dem Koppelnetz 104 übertragen. Einzelheiten zum IOM2-Übertragungsprotokoll sind der Produktschrift "ICs for Communications - IOM2 Interface Reference Guide", Siemens AG, München 3/91, Bestell-Nr. B115-H6397-X-X-7600, Seite 6 bis 12 zu entnehmen. Anstelle des IOM2-Übertragungsprotokoll kann zur bidirektionalen Datenübertragung zwischen dem Koppelnetz 104 und den Anschlußeinheiten 108, 109, 110 auch das PCM-Übertragungsprotokoll (pulse code modulation) verwendet werden.

Für eine Verbindung der Kommunikationsanlage 101 mit einem Datennetz, beispielsweise einem lokalen Rechnernetz 114 (local area network -LAN), weist die Kommunikationsanlage 101 eine separate Datennetzkopplungseinheit 115 auf. Die Datennetzkopplungseinheit 115 weist eine Mehrzahl von in Figur 1 nicht explizit dargestellten gleichen Kontaktvorrichtungen zum Anschluß von Controllereinheiten auf. Derartige Controllereinheiten verfügen über eine HDLC- und eine PCM-Schnittstelle zur Zentraleinheit 102 und über eine standardisierte MII-Schnittstelle (medium independent interface) zu einer LAN-Anschlußeinheit der Kommunikationsanlage 101. Eine Verbindung zwischen dem lokalen Rechnernetz 114 und der LAN-Anschlußeinheit kann beispielsweise mittels einer 10Base-T-oder einer 100Base-T-Schnittstelle realisiert werden.

Eine Controllereinheit der Datennetzkopplungseinheit 115 dient üblicherweise einer protokollgemäßen Vorverarbeitung von Steuerdaten, die über das lokale Rechnernetz 114 empfangen wurden, und deren Weiterleitung an die Zentraleinheit 102. Die Zentraleinheit 102 steuert dann die Ausführung der durch die Steuerdaten identifizierten Funktionen. Dies schließt auch von der Datennetzkopplungseinheit 115 auszuführende Funktionen ein. Die Funktionen, wie Kopplung von unterschiedlichen Rechnernetzen, externer Zugriff auf Netzressourcen im Rahmen von "Teleworking", CTI-Anwendungen oder "Voice over IP"-Anwendungen werden durch der Datennetzkopplungseinheit 115 zugeordnete funktionsspezifische digitale Signalprozessoren ausgeführt, die durch die zentrale Steuerungseinheit 103 angesteuert werden.

An das lokale Rechnernetz 114 können beispielsweise für spezielle Aufgaben vorgesehene Server angeschlossen werden, die für die Kommunikationsanlage 101 auf gängigen Personal Computern nicht aber in der zentralen Steuerungseinheit 103 lauffähige Programme verfügbar machen, die damit nicht auf die Kommunikationsanlage 101 portiert werden müssen. Zudem wird die zentrale Steuerungseinheit 103 durch eine Auslagerung einer entsprechenden Programmablaufsteuerung entlastet, so daß Prozeßrechen-Ressourcen der zentralen Steuerungseinheit 103 primär für vermittlungstechnische Steuerungsaufgaben reserviert werden können.

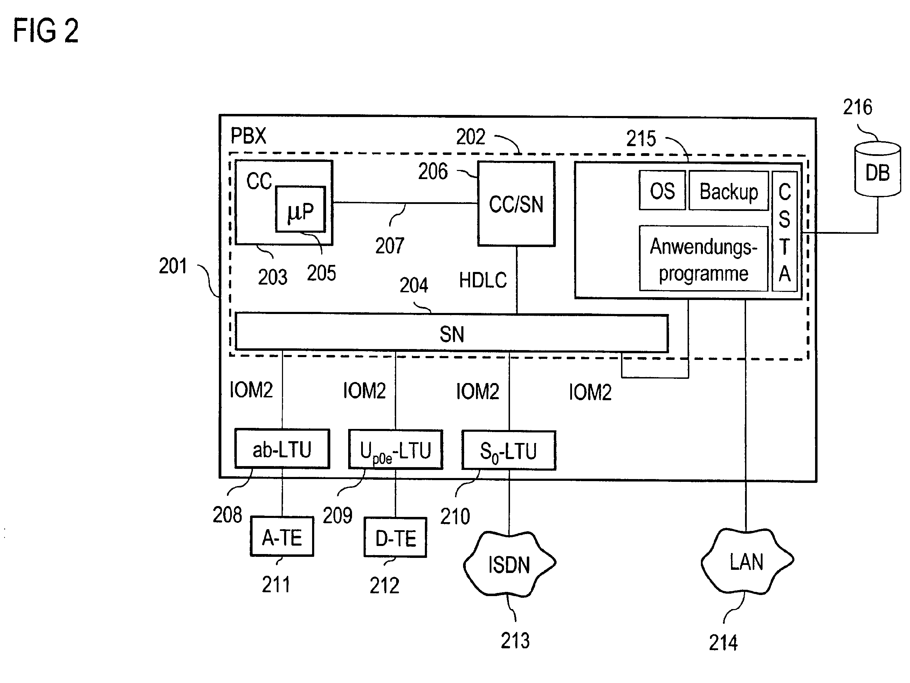

In Figur 2 ist der Aufbau einer Kommunikationsanlage 201 mit einer integrierten Server-Baugruppe 215 schematisch dargestellt. Die in Figur 2 dargestellte Kommunikationsanlage 201 entspricht hinsichtlich der Einbindung und Funktionalität von Zentraleinheit 202, Anschlußeinheiten 208, 209, 210, Kommunikationsendgeräten 211, 212 und weiteren Kommunikationsnetzen 213 der Kommunikationsanlage 101. So gliedert sich die Zentraleinheit 202 in eine zentrale Steuerungseinheit 203 mit einem Mikroprozessor 205, in ein Koppelnetz 204 und in eine Umwandlungseinheit 206, welche über einen Mikroprozessorbus 207 mit der zentralen Steuerungseinheit verbunden ist.

Neben den Anschlußeinheiten 208, 209, 210 ist eine in die Kommunikationsanlage integrierte Server-Baugruppe 215 an das Koppelnetz 204 angeschlossen. Die Server-Baugruppe 215 weist zumindest eine in Figur 2 nicht explizit dargestellte zentrale Recheneinheit zur Ausführung von Anwendungsprogrammen, eine Ein-/Ausgabeeinheit und eine Schnittstelle zum Anschluß an das Koppelnetz 204 auf. Auf der Server-Baugruppe ist vorzugsweise ein weitverbreitetes Betriebssystem, wie MS-Windows, Unix oder Linux, installiert, so daß die Ablauffähigkeit einer Vielzahl von gängigen Anwendungsprogrammen gewährleistet ist. Die Schnittstelle zum Koppelnetz 204 unterstützt wahlweise in der Kommunikationsanlage 201 verwendbare HDLC-, IOM2- oder PCM-Übertragungsprotokolle.

Des weiteren verfügt die integrierte Server-Baugruppe 215 über eine Schnittstelle für ein Datennetz mit paketorientierter Vermittlung, beispielsweise ein lokales Rechnernetz 214.

Dabei wird die Schnittstelle der integrierten Server-Baugruppe 215 für die Kommunikationsanlage 201 verfügbar gemacht, so daß eine zusätzliche, in Figur 1 dargestellte Datennetzkopplungseinheit 115 nicht mehr erforderlich ist. Dadurch ist es möglich Sprachinformationen zur Verarbeitung an die integrierte Server-Baugruppe 215 weiterzuleiten und durch diese für eine Verwendung im lokalen Rechnernetz 214 aufbereiten zu lassen. Mögliche Anwendungsgebiete sind beispielsweise Routing, Fernzugriffsdienst (remote access service - RAS), Verschlüsselung, Bereitstellung von CAPI-Schnittstellen (common application programming interface), Dateitransfer, Protokollkonvertierung entsprechend dem H.323-Standard ("Voice over IP") oder Sprachcodierung/-kompression. Weitere Anwendungsgebiete sind eine Bereitstellung CSTA-Anwendungen (computer supported telecommunications application) über TAPI-Programmierschnittstellen (telephony application programming interface) sowie eine Bereitstellung von TAPI-Treibern. Neben Kostenvorteilen durch eine derartige Ressourcenteilung ergeben sich insbesondere gegenüber externen Serverlösungen erhebliche Leistungsverbesserungen, die u.a. durch eine entfallende "Protokoll-Tunnellung" bedingt sind.

Darüber hinaus ist auf in einer Speichereinheit der integrierten Server-Baugruppe 215 ein in dieser ablauffähiges Datenbanksicherungsprogramm installiert, das für die Kommunikationsanlage 201 zur Sicherung von Daten zum Betrieb der Kommunikationsanlage 201 bzw. zur Ausführung von Leistungsmerkmalen verfügbar gemacht wird. Dies bietet den Vorteil der Nutzbarmachung in der Datenverarbeitung etablierter und erprobter Datensicherungsmechanismen ohne Zwischenschaltung zusätzlicher Server bzw. ohne Portierung der jeweiligen Datensicherungsprogramme auf Kommunikationsanlagenbetriebssysteme.

Außerdem ist die integrierte Server-Baugruppe 214 zur Wahrnehmung von Aufgaben eines Proxy-Servers durch Installation entsprechender Steuerungsprogramme ausgebildet. Damit kann die integrierte Server-Baugruppe 214 beispielsweise Funktionen eines "Internet-Proxy", eines "Gatekeepers" oder einer "Firewall" realisieren.

Die integrierte Server-Baugruppe 215 kann ferner zur Durchführung eines Abgleichs zwischen der Kommunikationsanlage 201 zugeordneten Datenbanken 216, die beispielsweise über eine Datenbank-Schnittstelle der integrierten Server-Baugruppe 215 an die Kommunikationsanlage 201 gekoppelt sind, und einem Meta-Verzeichnis ausgebildet sein. Die Implementierung erfolgt beispielsweise durch handelsüblich verfügbare Datenbank-Synchronisierungsprogramme. Beispiele für in übergreifenden Meta-Verzeichnissen speicherbare Daten sind Namens-, Teilnehmer- und Rufnummernverzeichnisse oder zentrale Kurzwahlspeicher und Telefonbücher, die mit Daten in Datenbanken einzelner Kommunikationsanlagen abgeglichen werden. Für einen Datenbankabgleich sind an der integrierten Server-Baugruppe 215 Datenbankschnittstellen vorgesehen, die beispielsweise das gebräuchliche LDAP-Protokoll (lightweight directory access protocol) unterstützen.

Die Anwendung der vorliegenden Erfindung ist nicht auf das beschriebene Ausführungsbeispiel beschränkt.

## Patentansprüche

1. Kommunikationsanlage (201) mit
- einer Steuerungseinheit (203) zur Steuerung von Funktionen der Kommunikationsanlage (201),
- einem durch die Steuerungseinheit (203) gesteuerten Koppelnetz (204) zur Vermittlung von Sprach- und/oder Dateninformationen,
- mindestens einer mit dem Koppelnetz (204) verbundenen Anschlußeinheit (208-210) zum Anschluß von Endgeräten (211-212), Kommunikations- (213) und/oder Rechnernetzen (214),
**gekennzeichnet durch**
- eine an das Koppelnetz (204) angeschlossene, in die Kommunikationsanlage (201) integrierte Server-Baugruppe(215) mit zumindest einer Recheneinheit zur Ausführung von Anwendungsprogrammen, einem Arbeitsspeicher, einer Ein-/Ausgabeeinheit und einer Schnittstelle zum Anschluß an das Koppelnetz (204).

2. Kommunikationsanlage nach Anspruch 1,
bei der die integrierte Server-Baugruppe (215) über ein Zeitmultiplex-Bussystem mit dem Koppelnetz (204) verbunden ist.

3. Kommunikationsanlage nach Anspruch 2,
bei der das Zeitmultiplex-Bussystem ein HDLC-, IOM2- oder ein PCM-Bussystem ist.

4. Kommunikationsanlage nach einem der Ansprüche 1 bis 3,
bei der die integrierte Server-Baugruppe(215) eine für die Kommunikationsanlage verfügbar gemachte Schnittstelle zu einem Datennetz mit paketorientierter Vermittlung aufweist.

5. Kommunikationsanlage nach einem der Ansprüche 1 bis 4,
bei der auf einem der integrierten Server-Baugruppe (215) zugeordneten Speichermedium ein für die Kommunikationsanlage (201) verfügbar gemachtes Datenbanksicherungsprogramm zur Sicherung von Daten zum Betrieb der Kommunikationsanlage und/oder zur Ausführung von Leistungsmerkmalen installiert ist, das durch die integrierte Server-Baugruppe (215) ausführbar ist.

6. Kommunikationsanlage nach einem der Ansprüche 1 bis 5,
bei der die integrierte Server-Baugruppe zur Wahrnehmung von Aufgaben eines Proxy-Servers ausgebildet ist.

7. Kommunikationsanlage nach einem der Ansprüche 1 bis 6,
bei der die integrierte Server-Baugruppe zur Durchführung eines Abgleichs zwischen der Kommunikationsanlage zugeordneten Datenbanken und einem Meta-Verzeichnis ausgebildet ist.

8. Integrierte Server-Baugruppe (215) für eine Kommunikationsanlage (201) gemäß Anspruch 1 mit
- zumindest einer Recheneinheit zur Ausführung von Anwendungsprogrammen,
- einem Arbeitsspeicher,
- einer Ein-/Ausgabeeinheit und
- einer Schnittstelle zum Anschluß an das Koppelnetz (204) der Kommunikationsanlage (201).

## Claims

1. Communications system (201) having
- a control unit (203) for controlling functions of the communications system (201),
- a switching network (204) controlled by the control unit (203) for switching voice and/or data information,
- at least one terminal unit (208-210) connected to the switching network (204) for connecting terminals (211-212), communication networks (213) and/or computer networks (214),
**characterized by**
- a server module (215) which is connected to the switching network (204) and is integrated in the communications system (201), which module has at least one computer unit for executing application programs, a working memory, an input/output unit and an interface for connection to the switching network (204).

2. Communications system according to Claim 1,
in which the integrated server module (215) is connected to the switching network (204) via a time-division multiplex bus system.

3. Communications system according to Claim 2,
in which the time-division multiplex bus system is an HDLC, IOM2 or PCM bus system.

4. Communications system according to one of Claims 1 to 3,
in which the integrated server module (215) has an interface made available for the communications system to a data network having packet-oriented switching.

5. Communications system according to one of Claims 1 to 4,
in which a database backup program made available to the communications system (201) for backing up data for operating the communications system and/or for executing features is installed on a storage medium assigned to the integrated server module (215), which program can be executed by the integrated server module (215).

6. Communications system according to one of Claims 1 to 5,
in which the integrated server module is designed for performing the tasks of a proxy server.

7. Communications system according to one of Claims 1 to 6,
in which the integrated server module is designed for performing a synchronization between the databases assigned to the communications system and a meta directory.

8. Integrated server module (215) for a communications system (201) according to Claim 1, having
- at least one computer unit for executing application programs,
- a working memory,
- an input/output unit, and
- an interface for connection to the switching network (204) of the communications system (201).

## Revendications

1. Installation de communication (201), comportant
- une unité de commande (203) destinée à commander des fonctions de l'installation de communication (201),
- un réseau de connexion (204) commandé par l'unité de commande (203) et destiné à transmettre des informations vocales et/ou des informations de données,
- au moins une unité de raccordement (208 à 210), reliée au réseau de connexion (204) et destinée au raccordement de terminaux (211 à 212), de réseaux de communication (213) et/ou de réseaux d'ordinateur (214),
**caractérisée par**
un module de serveurs (215) raccordé au réseau de connexion (204), intégré dans l'installation de communication (201) et comportant au moins une unité de calcul destinée à exécuter des programmes d'application, une mémoire de travail, une unité d'entrée/sortie et une interface pour le raccordement au réseau de connexion (204).

2. Installation de communication selon la revendication 1, dans laquelle le module de serveur intégré (215) est relié au réseau de connexion (204) par un système de bus multiplexé dans le temps.

3. Installation de communication selon la revendication 2, dans laquelle le système de bus multiplexé dans le temps est un système de bus HDLC, IOM2 ou PCM.

4. Installation de communication selon l'une des revendications 1 à 3, dans laquelle le module de serveur intégré (215) comporte une interface, rendue disponible pour l'installation de communication, avec un réseau de données avec transmission orientée par paquets.

5. Installation de communication selon l'une des revendications 1 à 4, dans laquelle un programme de sécurisation de banque de données, rendu disponible pour l'installation de communication (201) et destiné à garantir la sécurité de données pour l'exploitation de l'installation de communication et pour la réalisation de caractéristiques de puissance, est installé sur un support de mémorisation associé au module de serveur intégré (215), ledit programme pouvant être exécuté par le module de serveur intégré (215).

6. Installation de communication selon l'une des revendications 1 à 5, dans laquelle le module de serveur intégré est conformé pour remplir des tâches d'un serveur proxy.

7. Installation de communication selon l'une des revendications 1 à 6, dans laquelle le module de serveur intégré est conformé pour effectuer une adaptation entre des banques de données associées à l'installation de communication et un répertoire Meta.

8. Module de serveur intégré (215) destiné à une installation de communication (201) selon la revendication 1, ledit module de serveur intégré comportant
- au moins une unité informatique destinée à exécuter des programmes d'application,
- une mémoire de travail,
- une unité d'entrée/sortie et
- une interface pour le raccordement au réseau de connexion (204) de l'installation de communication (201).
